# EUROPEAN PATENT APPLICATION

(11) **EP 0 656 227 A1**
(43) Date of publication of application: **07.06.1995**
(21) Application number: 94904039.8
(22) Date of filing: 29.12.1993
(51) Int. Cl.: B01J 31/02, B01J 37/00, C08B 3/06

(54) **PROCESS FOR PRODUCING A MULTI-LAYER FOOD ITEM**

(30) Priority: 29.12.1992 RU 9291605
(71) Applicant: SMIRNOV, Andrei Konstantinovich, Sankt Petersburg, 191065 (RU)
(72) Inventor: SMIRNOV, Andrei Konstantinovich, Sankt Petersburg, 191065 (RU)
(74) Representative: Glawe, Delfs, Moll & Partner
(86) International application number: RU9300322
(87) International publication number: WO9414533

(57) **Abstract**

The process is intended for use in fast food outlets and involves fashioning a number of layers of a food paste made from various types of food product such as a fruit/vegetable paste, cheese/dairy paste, meat or fish. Each layer is individually shaped and undergoes heat treatment in a separate chamber, the latter being carried out by passing an alternating electric current through the food product until the layer is cooked. Finished layers are put together and receive the finished food product.

## Description

### Field of Invention

The invention relates to food industry and in particular to methods of manufacturing composite food products with the use of electric current treatment.

### Prior Knowledge

It has previously been proposed to manufacture a composite food item from minced meat or mixed meat-and-fish pastes forming high-porous and dense layers feasibly interlayed with cheese dust, spices, etc. (see US patent No. 4781929, Int. Cl. A23P1/325, 1988). According to this method, prefabricated layers are bonded sandwichlike or in the shape of a stick, wrapped in a sausage casing and undergo heat treatment by means of boiling followed by steaming. On finishing the heat treatment the sausage casing is removed from the resulting food item.

The disadvantages of the prior art invention are the process complexity (it consists of a great number of various manipulations) and its long duration. Besides, the process deals with closely related starting materials composing the multilayer item which makes it difficult to produce composite food products varied in gustatory qualities and at the same time well balanced over the whole set of necessary nutritive constituents.

### Detailed Description of the Invention

My invention is directed to such a process for producing multilayer food items that would enable to make food products with various high gustatory qualities, well balanced from the point of principle nutritive constituents, such as albumens, carbohydrates, vitamines and other biologically active matters. On the other hand, the invention is aimed at substantial processing time cut and consederable technologic facilitation.

To ahieve the aforesaid objects, the present process for multilayer food item manufacturing involves fashioning the layers of food pastes, treating them with heat and putting the cooked layers together. The food paste layers are fashioned on base of different principal constituents, the prosesses of moulding and heat treatment of each layer are performed individually, in a separate chamber, with the heat treatment being performed by passing alternating electric current through the food component, i.e. the electric heating is based here on the principle of electric resistance. The heat treatment process is terminated after the food paste layer is considered to be cooked, that is ready to eat; thereupon the layers are removed out of the chambers and put together. It is to be understood that in this context, by the "types" of food we mean vegetable, meat, fish or dairy products, hence it is obvious that here food pastes may be of fruit/vegetable, cheese/dairy, egg, meat or fish origin. Food paste is a resultant composition of reduced to fragments and kneaded basic components, such as meat, vegetables, fruit, cottage cheese, etc. seasoned with necessary relishes and additives to meet the requirements of desired consistency, gustatory and other qualities of the finished item. The layers may also be fashioned from food paste mixtures. Food paste is supplied to the fashioning and heating chamber continuously or in portions depending on the available equipment and the required output of the finished product. Food paste may be forced into the chamber by means of well-known screw-feeders, with concurrent displacement of the exposed portion by the portion to be treated. Food paste may also be fed into the chamber without excessive pressure, by means of well-known batch-weighers, measuring boxes, or manually. In this case cooked layers are withdrown from the chambers either with the help of conventional devices for removing finished products from the mould, of manually. For the purpose of passing the alternative current through the food staff layer, fashioning and heat treatment chambers have conductive walls or are equipped with special electrodes connected to a power supply. Electric current conditions and duration of its passing through the food paste vary depending on its composition, the layer thickness and other factors. On removing from the chambers, the layers are arranged together in one of known modes, such as superposing on one another.

Thanks to separate heat treating of each layer by passing the alternating current through it, the duration of a 5 to 15 mm thick layer does not exceed 30 to 40 seconds. That is, in case of concurrent treatment of all the layers, the duration of manufacturing a multilayer item will average 1 minute. In such a manner, with different components at hand, multilayer food items with various gustatory qualities and high nutriousness can very fast and rather easily be cooked.

Finally, still another advantage of the process resides in the fact that is does not require elaborate equipment and readily lends itself to automation.

### Example 1.

The process was performed on the equipment produces by an enterprize belonging to the company "Smirnoff & Sons" (St.-Petersburg). Food item was manufactures from two types of food paste: fruit/vegetable and chicken meat. The fruit/vegetable composition comprised the following components (in parts by weight): apples - 58.6, fresh tomatoes - 56.1; hen eggs - 10; vegetable oil - 5; dry bread crust - 18; fresh parsley - 6.7; salt - 0.4; red pepper - 0.05. Peeled apples freed of seeds, cut greens and tomatoes were passed through a vegetable grater; the mixture was doped with eggs beaten with salt and pepper, oil and dry bread crust, whereupon the composition was carefully kneaded into homogenuous paste. Chicken meat paste included (in parts by weight): chicken meat - 155; butter - 4; wheat bread - 14; milk - 10; fresh mushrooms - 51; nutmegs - 1; eggs - 10; salt - 4; pepper - 0.4. Chicken meat was minced in a mincing mashine twice, then was doped with shredded mushrooms and soaked in milk bread, whereupon the mixture was carefully kneaded. The resulting composition was seasoned with eggs, spices and carefully kneaded into homogenuous paste. Both pastes were forced in a separate flat chamber each, the latter being arranged one on top of the other. Food pastes, each in its chamber, were subjected to the alternating current at the voltage of 40 V and the strength of 55 A. After a 35-second exposure to the current culinary completed layers were squeezed out of their chambers under the pressure of the successive portions of food paste to he treated. The cooked layers were then put on one another to form a multilayer food item, which was cut into portions measured 100 by 70 mm. Therewith the chicken force meat layer was 5 mm thick while the fruit/vegetable layer was 10 mm thick. The thus manufactured culinary product is delicate in taste and smell, atractive in appearance and is meant to be delivered as hot food. It is handy for serving, for example, on a toast.

### Example 2.

The process was performed under the same conditions as shown in Example 1. Food pastes were fashioned from two types of starting material, cottage cheese and meat compositions. Cottage cheese composition comprised (in parts by weight): cottage cheese - 30; wheat flour - 20; hen eggs - 20; butter - 4; milk - 6; spring onions 25; salt - 10; pepper - 0.5. Cottage cheese was rubbed through a sieve and was doped with butter, spring onions chopped up into small particles, eggs, spices and milk. Next flour was added and the composition was carefully kneaded into homogenuous mixture. Meat composition comprised the following ingredients (in parts by weight): chop beef - 36; chop pork - 21; raw beef fat - 3; wheat bread without crusts - 16; onions - 2; water - 10; fresh hen eggs - 10; greens - 1; salt - 0.5; pepper - 0.1. Minced beef and pork were mixed with fat, bread soaked in milk, onions and spices. After kneading the mixture was minced in a mincing machine, whereupon it was thoroughly kneaded once again.

Thereupon both pastes were separately fed into shaping and heat treatment chambers and were concurrently exposed to the alternating current at the voltage of 40 V and strength of 55 A for 35 seconds. Thereafter cultinary finished layers were removed from the chambers and put on one another. The finished food item was delivered to a customer hot on a slice of bread.

### Practicability of the Invention.

The present invention can be widely used in snack-bars, cafeteries and restaurants of fast food type thanks to technologic ease of the procedd and broad possibilities for producing various food items immediately before they are delivered.

## Claims

1. Process for producing multilayer food item comprising fashioning a number of food paste layers, heating them and putting together, characterized by the layers being made from different types of food product, each layer being individually shaped and subject to heat treatment in a separate chamber, the latter operation being carried out by passing alternating electric current through the food layer until it is cooked.

2. Process for producing multilayer food item according to claim 1, in which food pastes or their mixtures are selected out of the series: fruit/vegetable, cheese/dairy, egg, meat or fish.

3. Process for producing multilayer food item according to claim 1, in which food pastes are fed into shaping and heat treatment chambers continuously.

4. Process for producing multilayer food item according to claim 1 in which food pastes are fed shaping and heat treatment chambers in portions.
